# EUROPEAN PATENT APPLICATION

(11) **EP 1 729 020 A1**
(43) Date of publication of application: **06.12.2006**
(21) Application number: 05011926.2
(22) Date of filing: 02.06.2005
(51) Int. Cl.: F16C 3/22, F02B 41/04, F02B 75/32

(54) **Elastic crank with an open frame structure for engine**

(71) Applicant: Meyer, Siegfried, 86732 Oettingen (DE)
(72) Inventor: Meyer, Siegfried, 86732 Oettingen (DE)
(74) Representative: Casalonga, Axel

(57) **Abstract**

A crank (4) for use in an engine is disclosed to have an open frame structure formed of a first crank member (41) and a second crank member (42), a crank pin (46) extended from the first crank member (41) at one side and connected to the piston (6) of the engine through a link (5), a shaft (48) extended from the second crank member (42) at an opposite side for output of thrust force received from the piston (6), and a first moment point (43) and a second moment point (44), which first moment point (43) being disposed at an elevation lower than the second moment point (44) when the crank pin (46) is in its uppermost position, i.e. closest to the cylinder of the piston, and being the bearing point to receive the thrust force from the piston (6) through the link (5). The thrust force of the piston (6) during its operation is concentrated on the first moment point (43) to rotate the crank efficiently.

## Description

### BACKGROUND OF THE INVENTION

### 1. Field of the Invention:

The present invention relates to a crank for engine and more particularly, to an open frame structure type crank for engine.

### 2. Description of the Related Art:

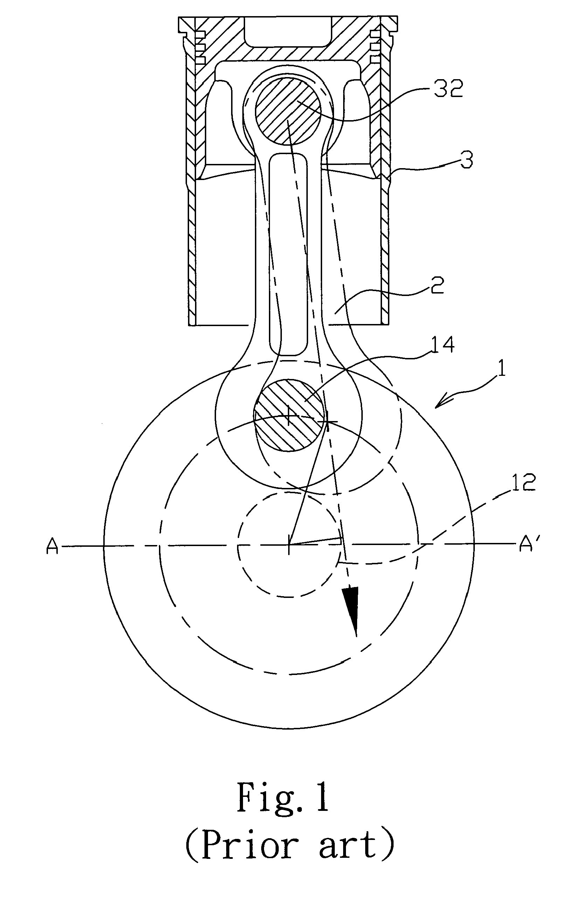

FIG. 1 is a schematic drawing showing a crank used in an engine according to the prior. According to this design, the crank **1** has a crank pin **14** and a shaft **12.** The crank pin **14** is coupled to one end of a link **2.** The other end of the link **2** is coupled to the piston pin **32** of the piston **3** of the engine. During cycling of intake, compression, combustion, and exhaust strokes of the motor vehicle engine to move the piston **3,** the piston **3** imparts a thrust force to the crank **1** via the link **2.** The crank **1** is a solid cylinder. During operation of the piston **3,** the thrust force of the piston **3** is acted upon the line of applied force **AA'** to produce a moment point to rotate the crank **1.** However, when the thrust force of the piston **3** is acted upon the line of applied force **AA',** the thrust force is not concentrated on the same moment point. Actually, both the two sides of the bearing surface of the crank **1** receive the thrust force from the piston **3,** and the side that receives a relatively greater amount of the thrust force from the piston **3** causes the crank **1** to rotate. According to this design, a certain amount of the thrust force from the piston **3** is wasted.

Therefore, it is desirable to provide a crank for engine that eliminates the aforesaid drawback.

### SUMMARY OF THE INVENTION

The present invention has been accomplished under the circumstances in view. It is one object of the present invention to provide a crank for engine, which concentrates the thrust force of the piston on the bearing point so that the crank is rotated with less amount of thrust force to produce a high output force. It is another object of the present invention to provide a crank for engine, which greatly improves the horsepower of the engine. To achieve these and other objects of the present invention, the crank comprises a crank pin connected to the piston of an engine through a link, and a shaft for output of thrust force received from the piston. The crank is an open frame crank defining a first moment point and a second moment point. The first moment point is disposed at an elevation lower than the second moment point. The first moment is also the bearing point to receive the thrust force from the piston through the link.

### BRIEF DESCRIPTION OF THE DRAWINGS

FIG. 1 is a schematic drawing showing a crank used in an engine according to the prior art.
FIG. 2 is a schematic drawing showing a crank used in an engine according to the present invention.
FIG. 3 is an exploded view of the crank according to the present invention.
FIG. 4 is similar to FIG. 2 but showing the crank moved.
FIG. 5 is a schematic drawing showing another application example of the present invention.

### DETAILED DESCRIPTION OF THE PREFERRED EMBODIMENT

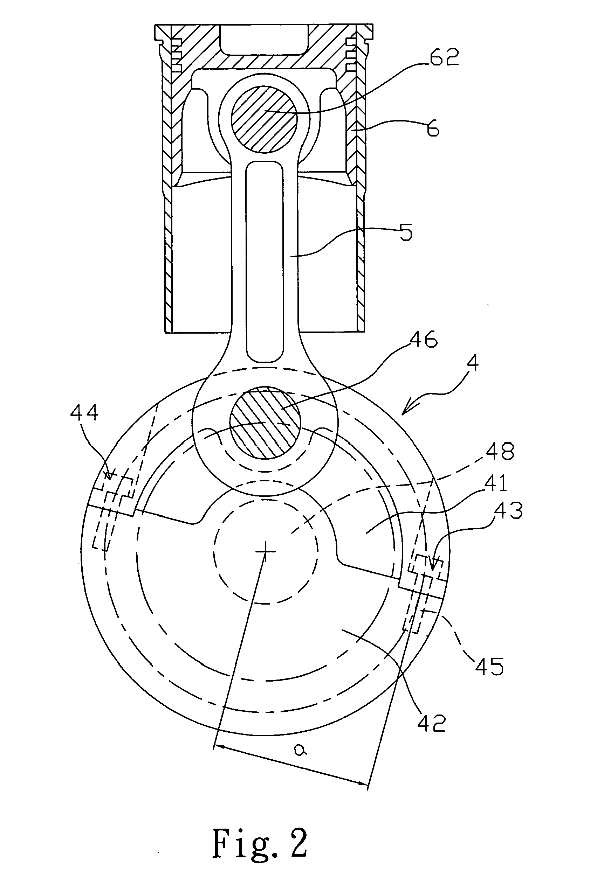

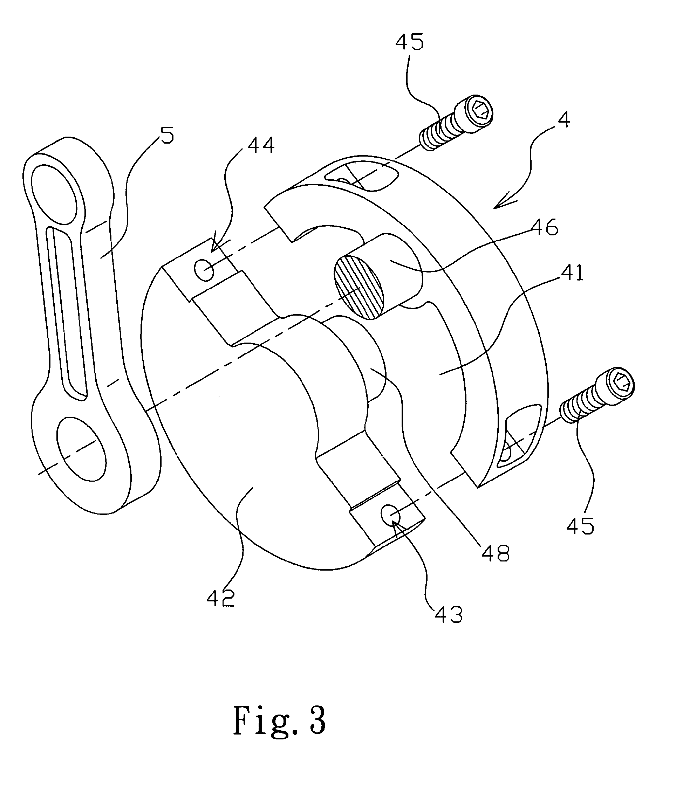

Referring to FIGS. 2 and 3, a crank **4** for use in an engine in accordance with the present invention is shown comprised of a first crank member **41,** and a second crank member **42.** The first crank member **41** and the second crank member **42** are fastened together with fastening devices, for example, two screws **45,** thereby forming the crank **4** that shows an open frame structure. The first crank member **41** has a pin **46** perpendicularly extending from one side thereof and coupled to one end of a link **5.** The other end of the link **5** is coupled to the piston pin **62** of a piston **6.** The second crank member **42** has a shaft **48** perpendicularly extending from one side thereof in direction reversed to the pin **46** of the first crank member **41** for output of driving force received from the piston **6** through the link **5.** The opening defined in between the first crank member **41** and the second crank member **42** of the open frame structure of the crank **4** may be variously shaped to have the crank **4** provide two moment points, namely, the first moment point **43** and the second moment point **44** at the two ends of the connection area between the first crank member **41** and the second crank member **42.** The position of the first moment point **43** is at a relatively lower elevation than the second moment point **44.** The relationship between the position of the first moment point **43** and the position of the second moment point **44** is fully understood from the illustration of FIG. 2. As illustrated, the first moment point **43** is at the right-sided screw **45** between the first crank member **41** and the second crank member **42;** the second moment point **44** is at the left-sided screw **45** between the first crank member **41** and the second crank member **42;** the first moment point **43** is at an elevation below the second moment point **44.**

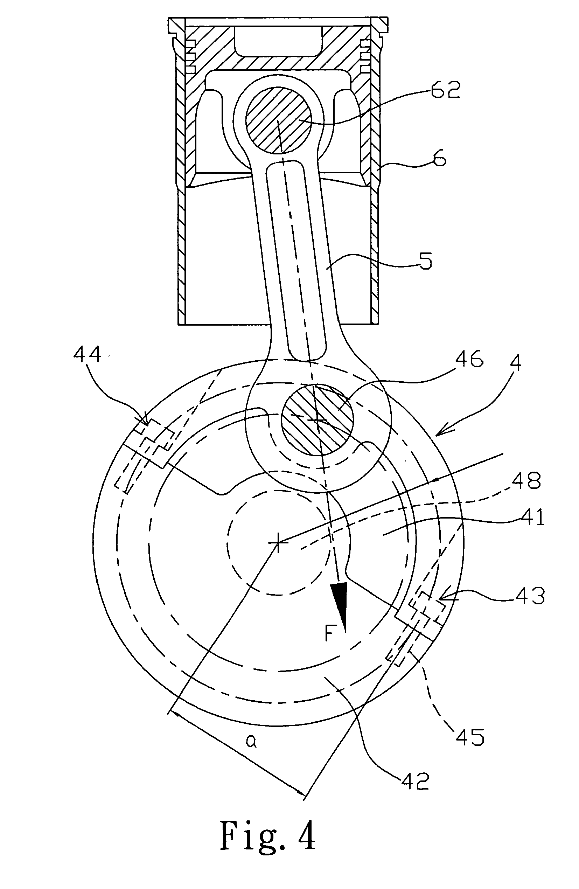

Referring to FIG. 4, during cycling of intake, compression, combustion, and exhaust strokes of the motor vehicle engine to move the piston **6,** the piston **6** imparts a thrust force to the crank **4** via the link **5.** Because the crank **4** has an open frame structure, the thrust force from the piston **6** through the link **5** will be concentrated on the bearing point, i.e., the location of the first moment point **43** to force the crank **4** to rotate clockwise or counter-clockwise. As force*length of arm of force = moment, the link **5** receives a comparatively greater thrust force to produce a comparatively greater moment for output through the shaft **48** of the crank **4.** Because of the relationship between the moment and the arm of force, the radius of the shaft **48** is smaller than the radius of the crank **4,** and the greater the ratio between the radius of the shaft **48** and the radius of the crank **4** is the higher the transmission efficiency of the crank **4** will be.

Because the thrust force from the piston **6** through the link **5** is concentrated on the point of the first moment point **43,** a comparatively greater moment is obtained to rotate the crank **4** efficiently. Under the same radius of the shaft **48,** the crank **4** provides a comparatively greater torque for a comparatively longer duration when compared with prior art designs. Further, during cycling of intake, compression, combustion, and exhaust strokes of the motor vehicle engine to move the piston **6,** fuel mixture can completely be combusted to reduce pollutants in exhaust gas. Because of complete combustion of fuel mixture, engine explosion is eliminated, and the noise level of the engine during its operation is greatly reduced. Because the invention greatly increases the torque of the engine, the consumption of fuel gas can be greatly saves.

The crank **4** fits the piston **6** of any of a variety of conventional engines. Compared with the prior art design, the location of the bearing point in the crank according to the present invention (i.e., the location of the first moment point **43)** is at a relatively outer side. Because the crank **4** fits the piston **6** of any of a variety of conventional engines, it is not necessary to change the structure of the piston of the engine for receiving the crank **4.**

Referring to FIG. 4 again, the thrust force from the piston **6** is transferred through the link 5 to the crank **4** in direction **F,** and the arm of force **a** is the length from the first moment point **43** to the center of the crank **4.** Because the link **5** is coupled to the pin **46** of the crank **4,** the thrust force **F** is concentrated on the first moment point **43** to move the crank **4** to make a circular motion during operation of the piston **6.**

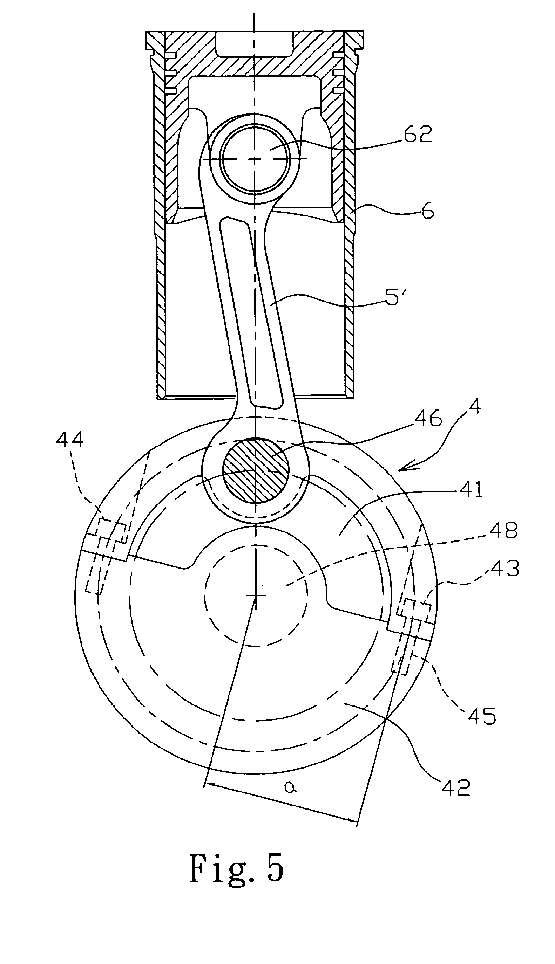

FIG. 5 is a schematic drawing showing another application example of the present invention. According to this application example, the crank **4** is coupled to the piston pin **62** of the piston **6** through a double curve-end link **5',** i.e., the double curve-end link **5'** has two distal ends respectively curved in reversed directions. Therefore, the crank **4** of the present invention fits a straight link **5** (see FIG. 2), and a double curve-end link **5'** (see FIG. 5).

A prototype of crank for engine has been constructed with the features of FIGS. 2~5. The crank for engine functions smoothly to provide all of the features discussed earlier.

Although particular embodiments of the invention have been described in detail for purposes of illustration, various modifications and enhancements may be made without departing from the spirit and scope of the invention.

## Claims

1. A crank comprising a crank pin connected to the piston of an engine through a link, and a shaft for output of thrust force received from the piston, wherein the crank is an pen frame crank defining a first moment point and a second moment point, said first moment point being disposed at an elevation lower than said second moment point, said first moment point being the bearing point to receive the thrust force from said piston through said link.

2. The crank as claimed in claim 1, wherein said open frame crank is made in integrity.

3. The crank as claimed in claim 1, wherein said open frame crank comprises a first crank member, and a second crank member fixedly connected to said first crank member said crank pin is fixedly provided at one side of said first crank member; said shaft is fixedly provided at one side of said second crank member opposite to said crank pin; said first moment point and said second moment point are respectively disposed at two distal ends in the connection area between said first crank member and said second crank member.

4. The crank as claimed in claim 3, wherein said open frame crank further comprises two fastening devices fastened to said first crank member and said second crank member at two sides to secure said first crank member and said second crank member fixedly together.

5. The crank as claimed in claim 4, wherein said fastening devices are screws.

6. The crank as claimed in claim 1, wherein said first moment point is adapted to rotate said crank clockwise/counter-clockwise during operation of said piston.

7. The crank as claimed in claim 1, wherein the distance between the center of said crank pin and the center of said shaft is smaller than the radius of the crank.

8. The crank as claimed in claim 3, wherein said first crank member and said second crank member each are formed of a plurality of parts.
